# EUROPEAN PATENT APPLICATION

(11) **EP 2 123 985 A1**
(43) Date of publication of application: **25.11.2009**
(21) Application number: 08380161.3
(22) Date of filing: 23.05.2008
(51) Int. Cl.: F24F 6/12

(54) **Ultrasonic water evaporator for air conditioners**

(71) Applicant: Ballesteros Avellaneda, Gerardo, 46530 Pucol (Valencia) (ES)
(72) Inventor: The designation of the inventor has not yet been filed
(74) Representative: Canadell-Isern, Roberto

(57) **Abstract**

"Water evaporator for air conditioners", constituted by a container (1) connected to the air conditioner, which collects the water given off by the latter device when it is in operation, being detected at a certain level by means of a level detector (2) that activates an electronic circuit, which in turn activates an ultrasonic transducer (3) which transforms the water into tiny particles, so that the nebulized water leaves the container thanks to a fan (4) through vents (5) made in the container.

## Description

### OBJECT

The object referred to by the invention that is protected in this Patent is comprised of a "Water evaporator for air conditioners", designed to avoid the collection of water by means of a container or channelling it to a drain as a result of the dripping water of the air conditioners.

### BACKGROUND

The air conditioners are devices that transform warm air in a room into a cool environment or vice versa. These devices become essential, principally in the summer. Installing an air conditioner in a house or office seems required in those places where the heat becomes unbearable.

As for the functioning of the air conditioner, the conventional system is predominant, consisting of a device that transforms the cold into heat and vice versa and that is located totally or partially in the interior of the rooms or premises.

As a consequence of the cooling, condensation occurs of the water vapour that is in the interior of the premises or room, giving as a result a dripping of water in the air conditioner, with it being necessary to collect it by means of a container or channelling it to a drain, with the inconvenience that this signifies.

The subject of the Patent is the elimination of the collecting or channelling of the water and the nebulization of this water, mixing it with the air and thus managing to maintain the humidity of the room's air.

### DESCRIPTION OF THE INVENTION

The purpose of the invention that constitutes the subject of this Patent consists of the elimination of the inconvenience typical of the known object, described above, having been conceived and developed bearing in mind this priority objective.

The water evaporator for air conditioners consists of a container connected to the air conditions, to which the water coming from this device runs when it is in operation, being detected at a certain level in the interior of the container by means of a detector that activates the ultrasonic transducer which transforms the water into tiny particles. The nebulized water leaves the container thanks to a fan through vents located in the container.

In this way, this system manages to avoid having to collect the water in a container, with the task of having to empty it regularly. In addition, if this device is located in the interior of the home it avoids the dryness of the air produced by the conventional air conditioners. Finally, it should be highlighted that it makes the installation of air conditioning systems simpler and less expensive, avoiding the installation to take the water given off to a drain.

### BRIEF DESCRIPTION OF THE DRAWINGS

To complement the description of the invention and to facilitate the interpretation of the structural characteristics of its subject, a drawing is included that represents the preferred realization of the "Water evaporator for air conditioners", which constitutes the subject of this Patent.

### In this drawing:

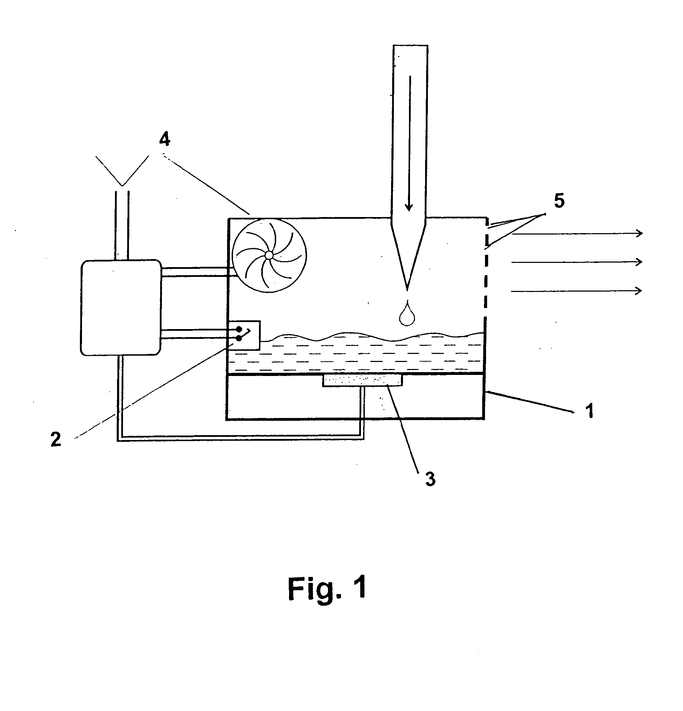

Figure 1 represents a schematic frontal elevation of the water evaporator for air conditioners.

### DESCRIPTION OF THE PREFERRED REALIZATION

To show clearly the nature and the scope of the advantageous application of the "Water evaporator for air conditioners", which constitutes the subject of the claimed invention, its structure is described below, making reference to the drawing that, representing the preferred realization of said object, which is an example in its most ample sense and not being limited to the application and the content of the claimed invention.

The water evaporator for air conditioners consists of a container (1) connected to an air conditioner, which will collect the water coming from this device when it is in operation, being detected at a certain level in the interior of the container by means of a level detector (2) which activates an electronic circuit, which in turn activates an ultrasonic transducer (3) which transforms the water into tiny particles. The nebulized water leaves the container thanks to a fan (4) through some vents (5) made in the container.

Thanks to this system, one avoids having to collect the water in a container with having to empty it regularly. In addition, if this device is located in the interior of the home, it avoids the dryness of the air produced by the conventional air conditioners. Lastly, it must be highlighted that it makes the air conditioning systems' installation simpler and less expensive, avoiding the installation to carry the water given off to a drain.

## Claims

1. "Water evaporator for air conditioners", constituted by a container (1) connected to the air conditioner, which collects the water given off by the latter device when it is in operation, **characterized because** when the water given off by said device reaches the container (1) it is detected at a certain level by means of a level detector (2) that activates an electronic circuit, which in turn activates an ultrasonic transducer (3) which transforms the water into tiny particles, so that the nebulized water leaves the container thanks to a fan (4) through vents (5) made in the container.
